# EUROPEAN PATENT SPECIFICATION

(11) **EP 1 705 796 B1**
(45) Date of publication and mention of the grant of the patent: **05.06.2013**
(21) Application number: 06111414.6
(22) Date of filing: 20.03.2006
(51) Int. Cl.: H03K 3/57

(54) **Apparatus for high voltage generation**
Gerät für Hochspannungserzeugung
Appareil de génération de haute tension

(30) Priority: 23.03.2005 KR 2005024139; 25.10.2005 KR 2005100705
(43) Date of publication of application: 27.09.2006
(73) Proprietor: Samsung Electronics Co., Ltd., Suwon-si, Gyeonggi-do, 443-742 (KR)
(72) Inventor: CHAE, Young-min, Gyeonggi-do (KR); KWON, Joong-gi, Gyeonggi-do (KR); OH, Chul-woo, Gyeonggi-do (KR); CHO, Jong-hwa, Gyeonggi-do (KR); HAN, Sang-yong, Gyeonggi-do (KR)
(74) Representative: Walaski, Jan Filip

(56) References cited:
- EP-A1- 0 989 662
- JP-A- 2004 145 341
- US-A- 5 734 564
- US-A1- 2004 000 897
- US-A1- 2004 228 049

## Description

The present invention relates to an apparatus to generate high voltage and a method thereof. More particularly, the present invention relates to an apparatus to generate high voltage by digital control using an application-specific integrated circuit (ASIC) on a control part and a digital control method thereof to control output stabilization and various outputs.

An image forming apparatus prints an image corresponding to original image data input on a recording medium, such as paper. The image forming apparatus includes a printer, a copy machine or a facsimile. An electro-photographic method is employed in the image forming apparatus, such as a laser beam printer, an LED Print Head (LPH) printer, and a facsimile. The image forming apparatus using the electro-photographic method performs printing through charge, exposure, development, transfer and fixation steps.

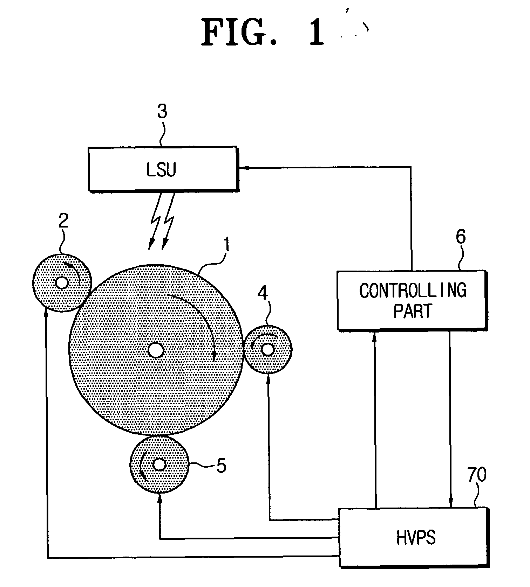

FIG. 1 schematically illustrates a conventional image forming apparatus using an electro-photographic method. Referring to FIG. 1, the image forming apparatus using the electro-photographic method includes a photoconductive drum 1, a charge roller 2, a laser scanning unit (LSU) 3, a development roller 4, a transfer roller 5, a controlling part 6 and a High Voltage Power Supply (HVPS) 70.

The conventional image forming apparatus using the electro-photographic method performs printing steps as follows. The HVPS 70 supplies a predetermined voltage to the charge roller 2, the development roller 4, and the transfer roller 5 according to control by the controlling part 6. The charge roller 2 evenly electrifies a surface of the photoconductive drum 1 with a charge voltage supplied from the HVPS 70. The LSU 3 scans light (e.g., laser beam) corresponding to image data input from the controlling part 6 to the photoconductive drum 1. Accordingly, an electrostatic latent image is formed on the surface of the photoconductive drum 1. A toner image is formed based on the electrostatic latent image formed on the surface of the photoconductive drum 1, using toner supplied by the development roller 4. The transfer roller 5 is driven by a transfer voltage supplied from the HVPS 70 and transfers the toner image formed on the photoconductive drum 1 to a recording paper. The toner image transferred to the recording paper is fixed on the printing paper by high heat and pressure of a fixer (not shown), and the printing paper is ejected to an outside of the conventional image forming apparatus in an ejection direction (not shown).

As a key part of the image forming apparatus, such as a copy machine, a laser beam printer or a facsimile, the HVPS 70 supplies voltage by instantaneously converting a low voltage of 12 ~ 24V to a high voltage of hundreds or thousands volts and charging the drum of the image forming apparatus. The HVPS 70 is used as a constant voltage or current source to provide a required voltage or current.

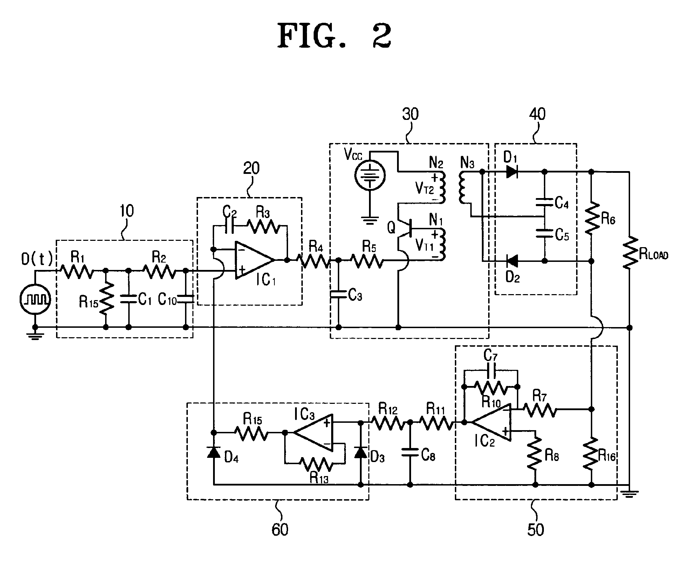

FIG. 2 is a circuit diagram illustrating a conventional HVPS. Referring to FIG. 2, the conventional HVPS includes a low pass filtering part 10, a voltage controlling part 20, an oscillator and power transforming part 30, a voltage dividing part 40, a voltage sensing part 50 and a protecting part 60. When the low pass filtering part 10 receives an input signal D(t) that is a PWM (Pulse Width Modulation) signal from an external engine controller, a level of an output voltage is decided according to a duty ratio, and the low pass filtering part 10 converts the input signal D(t) into a DC signal through an RC 2-step filter having resistors R₁, R₂, R₁₅ and capacitors C₁ and C₁₀. The DC signal is used as a reference signal to control an output voltage of the HVPS 70.

The voltage controlling part 20 is operated as a controller having a difference circuit IC₁ in parallel to a resistor R₃ and a capacitor C₂ to amplify an error signal, and compares the DC signal output by the low pass filtering part 10 and a signal having an actual voltage fed-back signal, to generate a driving signal of a transistor Q of the oscillator and power transforming part 30. The oscillator and power transforming part 30 controls a base current of the transistor Q based on the driving signal V_{T1} supplied by the voltage controlling part 20 through the resistors R₄ and R₅, and voltages between an emitter connected between R₄ and R₅ connected through a capacitor C₃ and a collector of the transistor Q change using a voltage V_{cc}.

Accordingly, a voltage V_{T2} of a first (primary) coil N₂ of a voltage transforming part is determined, and a second voltage is induced in a second (secondary) coil N₃ of the voltage transforming part having a high turn ratio.

The voltage dividing part 40 uses diodes D₁ and D₂ to rectify the secondary voltage and capacitors C₄ and C₅ to distribute and smooth the rectified voltage, and generates a final DC high voltage from an AC voltage (i.e., the secondary voltage) induced in the second (secondary) coil of the oscillator and power transforming part 30. The voltage sensing part 50 includes the resistors R₁₆, R₈, and R₇ an integrated circuit IC₂ in parallel with an RC filter made of a resistor R₁₀ and a capacitor C₇. The voltage sensing part 50 is connected to the protecting part 60 through resistors R₁₁, and R₁₂ and capacitor C₈, and the protecting part 60 includes an integrated circuit IC₂, diodes D₃ and D₄, and resistors R₁₅, and R₁₃. The voltage sensing part 50 and the protecting part 60 detect the final DC high voltage actually output, generate a feedback signal to the voltage controlling part 20 and prevent supplying an abnormal voltage.

The conventional HVPS illustrated in FIG. 2 is a circuit generating a high voltage to a development unit of one particular channel, and requires respective channels for supplying a predetermined high voltage to the charge roller 2, the development roller 4, and the transfer roller 5.

The conventional HVPS uses an analogue control method for individually and precisely controlling an output of each channel, and accordingly, errors caused by characteristic deflection between the low pass (RC) filter 10 and the voltage controlling part 20 should be corrected. The use of many components is a hindrance to cost-savings and the conventional HVPS may operate erroneously due to defective unit parts as a result of external factors. The transistor Q is used as switching device of the oscillator and the voltage transforming part 30 and always operates in a linear area, such that the transistor continuously generates heat. As illustrated in FIG. 2, the conventional HVPS uses many components, accordingly increasing manufacturing time during an assembly process, and requiring Printed Circuit Board (PCB) space for disposing the many components.

United States Patent Application No. US 2004/000897 discloses an example of a conventional high-voltage system for a printer, which makes use of feedback control.

United States Patent No. US 5,734,564 discloses an example of a switching power converter.

Embodiments of the present invention provide an apparatus to generate a high voltage and a method thereof using one ASIC-chip to control the high voltage, and a digital control method thereof.

According to an aspect of the present invention, there is provided an apparatus for generating a high voltage according to claim 1.

According to another aspect of the present invention, there is provided a method of generating a high voltage according to claim 9.

According to another aspect of the present invention, there is provided an image-forming apparatus according to claim 15.

Additional aspects and advantages of the present invention will be set forth in part in the description which follows and, in part, will be obvious from the description, or may be learned by practice of the invention.

These and/or other aspects and advantages of the present invention will become apparent and more readily appreciated from the following description of the embodiments, taken in conjunction with the accompanying drawings of which:
FIG. 1 is a schematic view illustrating a conventional image forming apparatus;
FIG. 2 is a circuit block diagram illustrating a conventional apparatus for generating a high voltage;
FIG. 3 is a block diagram illustrating an apparatus to generate a high voltage according to an embodiment of the present invention;
FIG. 4 is a block diagram illustrating a digital controlling part of the apparatus of FIG. 3; and
FIG. 5 illustrates operation of the circuit shown in FIG. 4 to detect zero crossing states.

Reference will now be made in detail to the embodiments of the present invention, examples of which are illustrated in the accompanying drawings, wherein like reference numerals refer to the like elements throughout. The embodiments are described below in order to explain the present invention by referring to the figures.

An apparatus to generate a high voltage according to an embodiment of the present invention includes a combination of various analog devices and an ASIC chip based on a digital control to control a first coil of a power transforming part. The ASIC chip can drive four channels according to an embodiment of the present invention.

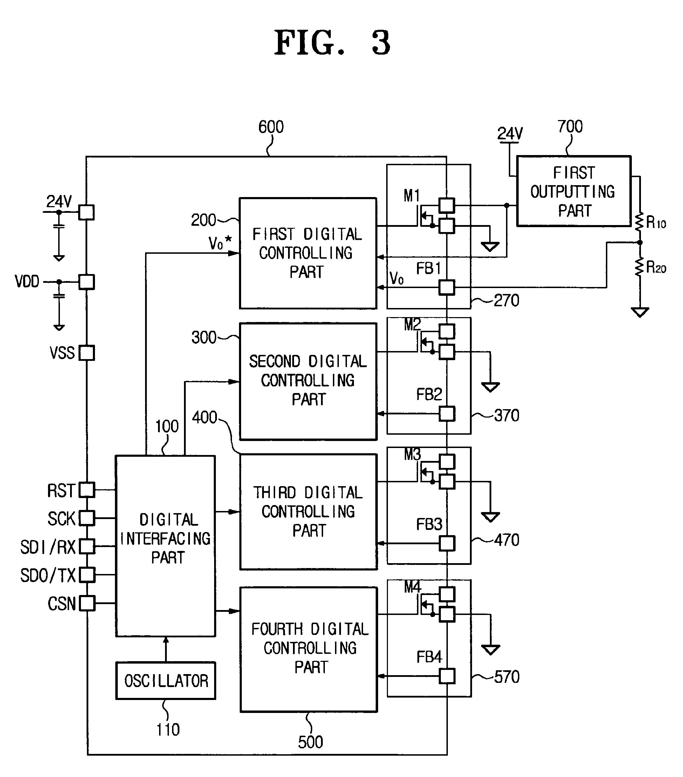

FIG. 3 is a block diagram illustrating an apparatus to generate a high voltage according to an embodiment of the present invention. Referring to FIG. 3, the apparatus to generate the high voltage has a semiconductor chip or an integrated circuit chip, such as an ASIC chip 600. The apparatus of FIG. 3 can be used in an HVPS 70 of an image forming apparatus of FIG. 1. The high voltage generated from the apparatus of FIG. 3 can be used to charge an image forming unit, such as a drum 1, a developer roller 4 and a transfer roller 5 of FIG.1. The ASIC chip 600 includes a digital interfacing part 100, an oscillator 110, first through fourth digital controlling parts 200, 300, 400 and 500, and first through fourth switching parts 270, 370, 470 and 570, and first through fourth outputting parts 700 each having a power transforming part, a power dividing part, and a rectifying part. The first through fourth switching parts 270, 370, 470 and 570 are each connected to an outputting part provided with the power transforming part and the power dividing part, respectively. FIG. 3 illustrates the first outputting part 700 connected to the first switching part 270 for convenience. The second, third, and fourth outputting parts can be connected to the second, third, fourth switching parts 370, 470 and 570, respectively.

The digital interfacing part 100 receives control data to determine a level of an output voltage from an external engine controlling part of the image forming apparatus by various methods of communication interfacing, through terminals RST, SCK, SDI/RX, SDO/RX, SDO/TX, CSN and the like. The various methods of communication interfacing include a conventional reception of a Pulse Width Modulation (PWM) signal having the level of the output voltage decided by a duty ratio, a Universal Asynchronous Receiver/Transmitter (UART), a Serial Peripheral Interface (SPI), which enables exchanges of data between two apparatuses in serial communication, and I²C which is a two-way serial bus.

The digital interfacing part 100 converts the control data input from the external engine controlling part into a predetermined format and transmits the converted control data to the first through fourth digital controlling parts 200, 300, 400 and 500, to be used as a control reference value (Vo*).

The first through fourth digital controlling parts 200, 300, 400 and 500 may have similar structure and function. The control reference value (Vo*) transmitted from the digital interfacing part 100 is compared with a signal (Vo) having an actual output voltage of each channel detected and fed back from the first outputting part 700. The result of the comparison is used as a driving signal of the switching device corresponding to the first through fourth switching parts 270, 370, 470 and 570.

The ASIC chip 600 may include the first through fourth switching parts 270, 370, 470 and 570 each using a MOSFET (M1, M2, M3, M4) as the switching device. The first through fourth switching parts 270, 370, 470 and 570 provide a controlled voltage to a first coil (primary coil) of the power transforming part serially connected to a drain of the MOSFET, by supplying the driving signal output by the first through fourth digital controlling parts 200, 300, 400 and 500, to a gate of the MOSFET. Since the MOSFET is used as a switching device, a heat sink to dissipate heat generated by the transistor is not necessary in the present embodiment.

The power transforming part of the first outputting part 700 is serially connected to the switching device 270, and resonates according to an on and off operation of the switching device 270, to generate an AC signal which may be used to control components of an image forming apparatus. Accordingly, a second coil (secondary coil) of the power transforming part is induced with the AC signal (or AC voltage) having a high electric potential. The power dividing part and the rectifying part rectify the AC voltage induced in the second coil of the power transforming part according to a range of an output voltage, or boost the AC voltage through a distributing circuit. The rectified and/or boosted AC voltage is used as a final output voltage to control the components of the image forming apparatus. The present embodiment is not limited to supplying power to components of the image forming apparatus. The ASIC chip 600 is provided with the oscillator 110, which is a clock generator, and is supplied with a 24V voltage as a power for high voltage supply, and another voltage VDD as a power for driving integrated circuits, such as the ASIC chip 600.

The outputting part 700 of each channel is controlled according to the control data transmitted by the external engine controlling part, such that a high voltage is generated.

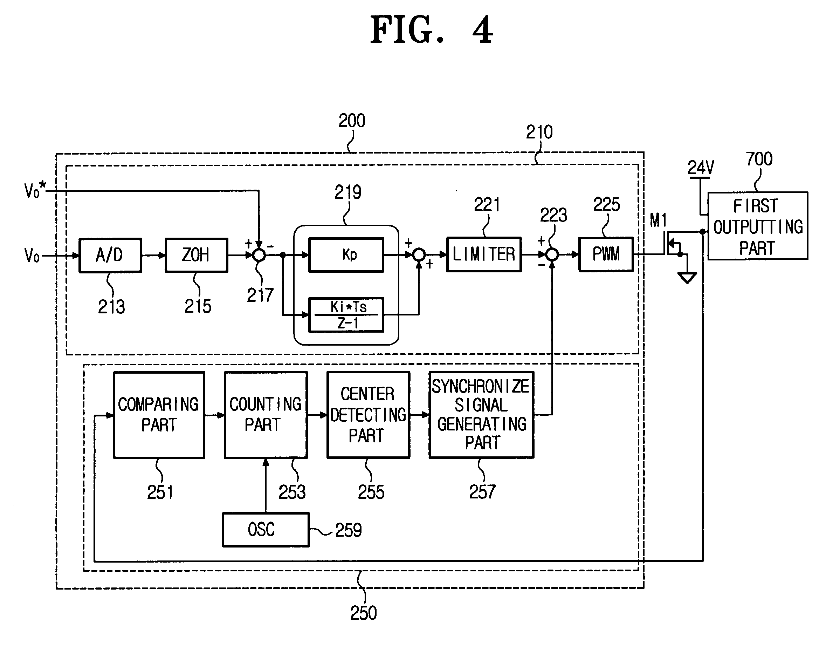

FIG. 4 is a block diagram illustrating the first digital controlling part 200 of the apparatus of FIG. 3. Referring to FIGS. 3 and 4, the first digital controlling part 200 has a power controlling part 210 and a frequency modulating part 250. The power controlling part 210 includes an analog to digital converter (A/D) 213, zero order hold circuit (ZOH) 215, a first calculating part 217, a proportional-integral (PI) controller 219 using a constant and/or a variable Kp and/or (Ki*Ts)/Z-1, a limiter 221, a second calculator 223, and a Pulse Width Modulation (PWM) circuit 225. The frequency modulating part 250 comprises a comparing part 251, a counting part 253, a center detecting part 255, a synchronize signal generating part 257, and an oscillator clock (OSC) 259.

The A/D 213 of the power controlling part 210 converts the signal Vo having the actual output voltage fed back into a digital signal. The ZOH 215 maintains a value of the converted digital signal until a next sampling cycle of the A/D 213.

The first calculating part 217 transmits a difference between the control reference value (Vo*) transmitted from the digital interfacing part 100 (see FIG. 3) and a signal output from the ZOH 215, to the PI controlling part 219.

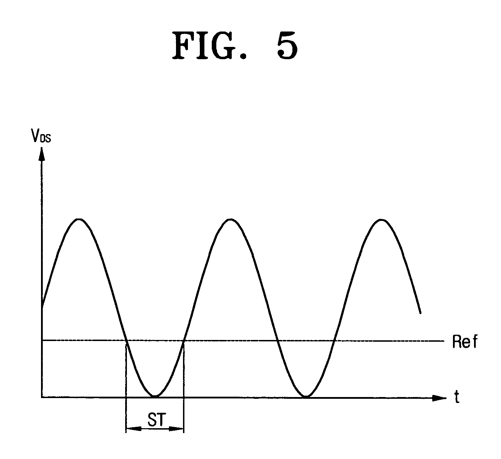

The comparing part 251 of the frequency modulating part 250 receives an inter-drain source voltage of the MOSFET M1 used as the switching device as a feedback signal FB1. Similarly, inter-drain source voltages of the MOSFETs M2, M3, and M4, are used as feedback signals FB2, FB3, and FB4, respectively. As illustrated in FIG. 5, a zero crossing state is detected with respect to a predetermined reference value Ref, as a result of comparing the feedback signal FB1 and the predetermined reference value Ref. When the zero crossing state is detected (that is, Ref is equal to the feedback signal), the counting part 253 receives a clock signal from the OSC 259, to count. The counting part 253 counts a time interval ST from a detection point of the zero crossing state received from the comparing part 251 to a detection point of a next zero crossing state. According to the result of counting by the counting part 253, the center detecting part 255 determines an intermediary (center) point between detection points of the zero crossing state, and the detected intermediary point within the time interval ST is substantially a moment when the inter-drain source voltage of MOSFET M1 is minimized. The center detecting part 255 transmits the intermediary point (moment) to the synchronize signal generating part 257 and accordingly, the synchronize signal generating part 257 generates a synchronize signal which is an optimum switching time to have a minimal inter-drain source voltage of MOSFET M1, and thereby minimizing a power loss.
An output signal of the PI controlling part 219 is compared with the synchronize signal output from the frequency modulating part 250, through the limiter 221 that limits a level of an output signal to a predetermined range, such that a PWM form of a gate signal is generated to be supplied to a gate end of the MOSFET M1. As illustrated in FIG. 5, the generated PWM form of the gate signal causes a switching operation of the MOSFET M1 in the vicinity of a point or the moment when the inter-drain source voltage is minimized (ST), according to the synchronize signal output by the synchronize signal generating part 257, and the power loss during the switching operation is minimized.

The structure and function of the second through fourth digital controlling parts 300, 400, and 500 are similar to the above-described first digital controlling part 200.

In each of the digital controlling parts 200, 300, 400, and 500 may be embodied a structure to perform a voltage control function including an RC filter and operational amplifier, the structure being similar to the voltage controlling part 20 used in the conventional apparatus for generating high voltage of FIG. 2. The embodied structures enables the ASIC chip 600 to actively cope with variance of load connected to any of the first through fourth outputting parts 700. The entire structure of the apparatus to generate high voltage may be further simplified by including the switching devices in ASIC chip.

Because one ASIC chip enables to output four or more channels, multi-output may be possible by using a plurality of ASIC chips in image forming apparatuses, for example a Mono LBP and a Tandem C-LBP.

As above described, according to various embodiments of the present invention, it is enabled part savings and compactness of the apparatus to generate a high voltage usable with an image forming apparatus, by having one ASIC chip and using a digital control method. Functionality of the image forming apparatus is expanded by using control data transmitted by various methods of communication interfacing such as SPI, UART or I²C, as a control reference value.

By controlling a variable value, such as a proportional gain used for the digital controlling part in the ASIC chip, embodiments of the apparatus to generate a high voltage achieve an easy optimum control according to output state and more flexibility. The efficiency of mass production is increased by reducing the time needed for tuning each parameter and by including the MOSFET used as a switching device in the ASIC chip, heat-generation problems of the conventional HVPS are overcome.

Although a few embodiments of the present invention have been shown and described, it will be appreciated by those skilled in the art that changes may be made in these embodiments without departing from the invention, the scope of which is defined in the appended claims.

## Claims

1. An apparatus for generating a high voltage, comprising:
a switching part (270, 370, 470, 570) configured to control a voltage to be induced in a secondary coil (N₃) of a power transforming part (30), by interrupting a current in a primary coil (N₂) of the power transforming part (30); and
a digital controlling part (200, 300, 400, 500) configured to control an interruption operation of the switching part (270, 370, 470, 570) according to control data,
wherein the digital controlling part comprises (200, 300, 400, 500):
a frequency modulating part (250) configured to generate a synchronize signal corresponding to a moment when the switching part (270, 370, 470, 570) requires a minimized resonance voltage to perform the interruption operation, wherein the frequency modulating part comprises a centre detecting part (255) configured to determine said moment as being a mid-point between two zero crossing states in a comparison between a first reference voltage (Ref) and a first feedback signal (FB1) from the switching part; and the digital controlling part (200, 300, 400, 500) further comprising:
a voltage modulating part (210) configured to perform the interruption operation corresponding to the synchronize signal and to modulate a cycle of the interruption operation of the switching part (270, 370, 470, 570), according to the comparison between a second reference voltage (Vo*) determined from the control data and a second feedback signal (Vo) received from an output part (700) which comprises the power transforming part (30).

2. The apparatus as claimed in claim 1, further comprising:
a digital interfacing part (100) for interfacing with an external device to provide the control data supplied from the external device to the digital controlling part (200, 300, 400, 500) according to a predetermined method of communication.

3. The apparatus as claimed in claim 2, wherein the switching part, the digital interfacing part (100) and the digital controlling part (200, 300, 400, 500) are disposed on a single chip 600.

4. The apparatus according to claim 3, wherein the chip comprises an ASIC chip 600.

5. The apparatus as claimed in claim 2, 3 or 4, wherein the digital interfacing part (100) is configured to the convert the control data from a PWM form into a digital form and to provide the converted control data to the digital controlling part (200, 300, 400, 500).

6. The apparatus as claimed in any one of the preceding claims, wherein the digital control part (200, 300, 400, 500) is configured to receive the control data through a predetermined method, and the predetermined method is one of a SPI (Serial Peripheral interface), a UART (Universal Asynchronous Receiver/Transmitter) and an I²C bus.

7. The apparatus as claimed in any one of the preceding claims, wherein the switching part (270, 370, 470, 570) comprises a MOSFET configured to perform the interruption operation.

8. An image forming apparatus, comprising apparatus for generating a high voltage according to any one of the preceding claims.

9. A method of generating a high voltage, the method comprising:
receiving control data through a communication interface;
controlling a switching operation of a switching part (270, 370, 470, 570), according to the received control data to interrupt a current supplied to a primary coil (N₂) of a power transforming part (30, 700) to modulate a voltage induced in a secondary coil (N₃), wherein the controlling step comprises:
determining a moment when the switching part (270, 370, 470, 570) requires a minimized resonance voltage to perform an interruption operation as being a mid-pomt between two zero crossing states in a comparison between a first reference voltage (Ref) and a first feedback signal from the switching part (270, 370, 470, 570);
generating a synchronize signal corresponding to said moment ;
performing the interruption operation corresponding to the synchronize signal; and
modulating a cycle of the interruption operation of the switching part (270, 370, 470, 570), according to the comparison between a second reference voltage (Vo*) determined from the control data and a second feedback signal received from an output part which comprises the power transforming part (30).

10. The method as claimed in claim 9, wherein the method is performed in an ASIC chip.

11. The method as claimed in claims 9 or 10, wherein the control data is received through one of a SPI (Serial Peripheral interface), a UART (Universal Asynchronous Receiver/Transmitter) and an I²C bus.

12. The method as claimed in any one of claims 9 to 11, wherein the predetermined switching device comprises a MOSFET.

13. The method as claimed in any one of claims 9 to 12, further comprising:
supplying the induced voltage to an image forming unit of an image forming apparatus.

14. An image forming apparatus, comprising:
an image forming unit;
a voltage outputting apparatus as claimed in claim 1;
the output part (700) comprising the power transforming part (30) having the primary coil (N₂) and the secondary coil (N₃), wherein the primary coil and secondary coil are arranged to supply a voltage to the image forming unit; and
a single monolithic chip configured to receive the control data from at least one of the image forming unit and the voltage outputting apparatus, to interrupt a current supplied to the primary coil according to the control data, and to generate the voltage with the interrupted current in the secondary coil.

15. The apparatus as claimed in claim 14, wherein the monolithic chip comprises:
a digital interfacing part (100) configured to receive the control data and to provide the second reference voltage (Vo*) according to the received control data; and at least one high voltage channel configured to output the voltage
wherein the digital controlling part is arranged to receive the second reference voltage from the digital interfacing part and the second feedback signal from the output part (700) and to output a driving signal according to a comparison between the received second reference voltage and the second feedback signal and
the switching part is arranged to receive the driving signal from the digital controlling part and to interrupt the current supplied to the primary coil according to the driving signal.

## Patentansprüche

1. Gerät zum Erzeugen von Hochspannung, das Folgendes umfasst:
einen Schaltteil (270, 370, 470, 570), konfiguriert zum Regeln einer in einer sekundäre Spule (N₃) eines Leistungstransformationsteils (30) zu induzierenden Spannung durch Unterbrechen eines Stroms in einer primären Spule (N₂) des Leistungstransformationsteils (30); und
einen digitalen Steuerteil (200, 300, 400, 500), konfiguriert zum Steuern eines Unterbrechungsvorgangs des Schaltteils (270, 370, 470, 570) gemäß Steuerdaten, wobei der digitale Steuerteil (200, 300, 400, 500) Folgendes umfasst:
einen Frequenzmodulationsteil (250), konfiguriert zum Erzeugen eines Synchronisationssignals, das einem Moment entspricht, an dem der Schaltteil (270, 370, 470, 570) eine minimierte Resonanzspannung zum Durchführen des Unterbrechungsvorgangs benötigt, wobei der Frequenzmodulationsteil einen Mittendetektionsteil (255) umfasst, konfiguriert zum Ermitteln des genannten Moments als einen Mittelpunkt zwischen zwei Nulldurchgangszuständen in einem Vergleich zwischen einer ersten Referenzspannung (Ref) und einem ersten Feedback-Signal (FB1) vom Schaltteil; und wobei der digitale Steuerteil (200, 300, 400, 500) ferner Folgendes umfasst:
einen Spannungsmodulationsteil (210), konfiguriert zum Durchführen des Unterbrechungsvorgangs, der dem Synchronisationssignal entspricht, und zum Modulieren eines Zyklus des Unterbrechungsvorgangs des Schaltteils (270, 370, 470, 570) gemäß dem Vergleich zwischen einer zweiten Referenzspannung (Vo*), die von den Steuerdaten ermittelt wird, und einem zweiten Feedback-Signal (Vo), das von einem Ausgangsteil (700) empfangen wird, der den Leistungstransformationsteil (30) umfasst.

2. Gerät nach Anspruch 1, das ferner Folgendes umfasst:
einen digitalen Schnittstellenteil (100) zum Koppeln mit einer externen Vorrichtung zum Liefern der von der externen Vorrichtung gelieferten Steuerdaten zum digitalen Steuerteil (200, 300, 400, 500) gemäß einem vorbestimmten Kommunikationsverfahren.

3. Gerät nach Anspruch 2, wobei der Schaltteil, der digitale Schnittstellenteil (100) und der digitale Steuerteil (200, 300, 400, 500) auf einem einzigen Chip (600) angeordnet sind.

4. Gerät nach Anspruch 3, wobei der Chip einen ASIC-Chip (600) umfasst.

5. Gerät nach Anspruch 2, 3 oder 4, wobei der digitale Schnittstellenteil (100) zum Umwandeln der Steuerdaten von einer PWM-Form in eine digitale Form und zum Anlegen der konvertierten Steuerdaten an den digitalen Steuerteil (200, 300, 400, 500) konfiguriert ist.

6. Gerät nach einem der vorherigen Ansprüche, wobei der digitale Steuerteil (200, 300, 400, 500) zum Empfangen der Steuerdaten durch ein vorbestimmtes Verfahren konfiguriert ist, wobei das vorbestimmte Verfahren eines aus SPI (Serial Peripheral Interface), UART (Universal Asynchronous Receiver/Transmitter) und I²C-Bus ist.

7. Gerät nach einem der vorherigen Ansprüche, wobei der Schaltteil (270, 370, 470, 570) einen zum Durchführen des Unterbrechungsvorgangs konfiguriert MOSFET umfasst.

8. Bilderzeugungsgerät, das ein Gerät zum Erzeugen von Hochspannung nach einem der vorherigen Ansprüche umfasst.

9. Verfahren zum Erzeugen von Hochspannung, wobei das Verfahren Folgendes beinhaltet:
Empfangen von Steuerdaten durch eine Kommunikationsschnittstelle;
Steuern eines Schaltvorgangs eines Schaltteils (270, 370, 470, 570) gemäß den empfangenen Steuerdaten zum Unterbrechen eines einer primären Spule (N₂) eines Leistungstransformationsteils (30, 700) zugeführten Stroms zum Modulieren einer in einer sekundären Spule (N₃) induzierten Spannung, wobei der Steuerschritt Folgendes beinhaltet:
Ermitteln eines Moments, an dem der Schaltteil (270, 370, 470, 570) eine minimierte Resonanzspannung zum Durchführen eines Unterbrechungsvorgangs benötigt, als einen Mittelpunkt zwischen zwei Nulldurchgangszuständen in einem Vergleich zwischen einer ersten Referenzspannung (Ref) und einem ersten Feedback-Signal vom Schaltteil (270, 370, 470, 570);
Erzeugen eines Synchronisationssignals, das dem genannten Moment entspricht;
Durchführen des Unterbrechungsvorgangs entsprechend dem Synchronisationssignal; und
Modulieren eines Zyklus des Unterbrechungsvorgangs des Schaltteils (270, 370, 470, 570) gemäß dem Vergleich zwischen einer zweiten Referenzspannung (Vo*), die von den Steuerdaten ermittelt wurde, und einem zweiten Feedback-Signal, das von einem Ausgangsteil empfangen wurde, der den Leistungstransformationsteil (30) umfasst.

10. Verfahren nach Anspruch 9, wobei das Verfahren in einem ASIC-Chip ausgeführt wird.

11. Verfahren nach Anspruch 9 oder 10, wobei die Steuerdaten durch eines aus SPI (Serial Peripheral Interface), UART (Universal Asynchronous Receiver/Transmitter) und I²C-Bus empfangen werden.

12. Verfahren nach einem der Ansprüche 9 bis 11, wobei die vorbestimmte Schaltvorrichtung einen MOSFET umfasst.

13. Verfahren nach einem der Ansprüche 9 bis 12, das ferner das Anlegen der induzierten Spannung an eine Bilderzeugungseinheit eines Bilderzeugungsgeräts beinhaltet.

14. Bilderzeugungsgerät, das Folgendes umfasst:
eine Bilderzeugungseinheit;
ein Spannungsausgabegerät nach Anspruch 1;
den Ausgabeteil (700), der den Leistungstransformationsteil (30) mit der primären Spule (N₂) und der sekundären Spule (N₃) umfasst, wobei die primäre Spule und die sekundäre Spule zum Anlegen einer Spannung an die Bilderzeugungseinheit angeordnet sind; und
einen einzelnen monolithischen Chip, konfiguriert zum Empfangen der Steuerdaten von der Bilderzeugungseinheit und/oder von dem Spannungsausgabegerät, zum Unterbrechen eines der primären Spule zugeführten Stroms gemäß den Steuerdaten und zum Erzeugen der Spannung mit dem unterbrochenen Strom in der sekundären Spule.

15. Gerät nach Anspruch 14, wobei der monolithische Chip Folgendes umfasst:
einen digitalen Schnittstellenteil (100), konfiguriert zum Empfangen der Steuerdaten und zum Bereitstellen der zweiten Referenzspannung (Vo*) gemäß den empfangenen Steuerdaten; und
wenigstens einen Hochspannungskanal, konfiguriert zum Ausgeben der Spannung,
wobei der digitale Steuerteil die Aufgabe hat, die zweite Referenzspannung vom digitalen Schnittstellenteil und das zweite Feedback-Signal vom Ausgangsteil (700) zu empfangen und ein Ansteuerungssignal gemäß einem Vergleich zwischen der empfangenen zweiten Referenzspannung und dem zweiten Feedback-Signal auszugeben, und
der Schaltteil die Aufgabe hat, das Ansteuerungssignal vom digitalen Steuerteil zu empfangen und den der primären Spule zugeführten Strom gemäß dem Ansteuerungssignal zu unterbrechen.

## Revendications

1. Appareil destiné à générer une haute tension, comprenant :
une partie à commutation (270, 370, 470, 570) configurée de façon à piloter une tension devant être induite dans une bobine secondaire (N₃) d'une partie à transformation d'énergie (30), grâce à l'interruption d'un courant dans une bobine primaire (N₂) de la partie à transformation d'énergie (30) ; et
une partie à commande numérique (200, 300, 400, 500) configurée de façon à piloter une opération d'interruption de la partie à commutation (270, 370, 470, 570) en fonction de données de commande, cas dans lequel la partie à commande numérique (200, 300, 400, 500) comporte:
une partie à modulation de fréquence (250) configurée de façon à générer un signal de synchronisation lequel correspond à un moment auquel la partie à commutation (270, 370, 470, 570) nécessite une tension à résonance minimisée afin de réaliser l'opération d'interruption, cas dans lequel la partie à modulation de fréquence comporte une partie à détection de centre (255) configurée de façon à déterminer ledit moment comme étant un point médian entre deux états de passage par zéro dans une comparaison entre une première tension de référence (Ref) et un premier signal de rétroaction (FB1) en provenance de la partie à commutation ; et la partie à commande numérique (200, 300, 400, 500) comprenant en outre :
une partie à modulation de tension (210) configurée de façon à réaliser l'opération d'interruption correspondant au signal de synchronisation et à moduler un cycle de l'opération d'interruption de la partie à commutation (270, 370, 470, 570), en fonction de la comparaison entre une deuxième tension de référence (Vo*) déterminée à partir des données de commande et un deuxième signal de rétroaction (Vo) reçu à partir d'une partie à sortie (700) qui comporte la partie à transformation d'énergie (30).

2. Appareil selon la revendication 1, comprenant en outre :
une partie à interfaçage numérique (100) pour assurer l'interface avec un dispositif externe afin d'acheminer les données de commande provenant du dispositif externe vers la partie à commande numérique (200, 300, 400, 500), en fonction d'un procédé prédéterminé de communication.

3. Appareil selon la revendication 2, la partie à commutation, la partie à interfaçage numérique (100) et la partie à commande numérique (200, 300, 400, 500) étant disposées sur une puce individuelle (600).

4. Appareil selon la revendication 3, la puce comprenant une puce ASIC (600).

5. Appareil selon la revendication 2, 3 ou 4, la partie à interfaçage numérique (100) étant configurée de façon à convertir les données de commande d'une forme de modulation d'impulsions en largeur, PWM, en une forme numérique, et à fournir les données de commande converties à la partie à commande numérique (200, 300, 400, 500).

6. Appareil selon l'une quelconque des revendications précédentes, la partie à commande numérique (200, 300, 400, 500) étant configurée de façon à recevoir les données de commande par le biais d'un procédé prédéterminé, et le procédé prédéterminé étant l'un des suivants, à savoir une interface périphérique série (SPI), un émetteur/récepteur asynchrone universel (UART) et un bus I²C.

7. Appareil selon l'une quelconque des revendications précédentes, la partie à commutation (270, 370, 470, 570) comprenant un MOSFET configuré de façon à réaliser l'opération d'interruption.

8. Appareil de formation d'images comprenant un appareil destiné à générer une haute tension, en conformité avec l'une quelconque des revendications précédentes.

9. Procédé de génération d'une haute tension, le procédé comprenant les actions consistant à :
recevoir des données de commande par l'intermédiaire d'une interface de communication ;
piloter une opération de commutation d'une partie à commutation (270, 370, 470, 570), en fonction des données de commande reçues afin d'interrompre un courant fourni à une bobine primaire (N₂) d'une partie à transformation d'énergie (30, 700) pour moduler une tension induite dans une bobine secondaire (N₃), cas dans lequel l'étape de pilotage comprend les actions consistant à :
déterminer un moment auquel la partie à commutation (270, 370, 470, 570) nécessite une tension à résonance minimisée afin de réaliser une opération d'interruption, comme étant un point médian entre deux états de passage par zéro dans une comparaison entre une première tension de référence (Ref) et un premier signal de rétroaction en provenance de la partie à commutation (270, 370, 470, 570) ;
générer un signal de synchronisation correspondant audit moment ;
réaliser l'opération d'interruption correspondant au signal de synchronisation ; et
moduler un cycle de l'opération d'interruption de la partie à commutation (270, 370, 470, 570), en fonction de la comparaison entre une deuxième tension de référence (Vo*) déterminée à partir des données de commande et un deuxième signal de rétroaction reçu à partir d'une partie à sortie qui comporte la partie à transformation d'énergie (30).

10. Procédé selon la revendication 9, le procédé étant réalisé dans une puce ASIC.

11. Procédé selon la revendication 9 ou 10, les données de commande étant reçues par l'intermédiaire de l'un des postes suivants, à savoir une interface périphérique série (SPI), un émetteur/récepteur asynchrone universel (UART) et un bus I²C.

12. Procédé selon l'une quelconque des revendications 9 à 11, le dispositif à commutation prédéterminé comportant un MOSFET.

13. Procédé selon l'une quelconque des revendications 9 à 12, comprenant en outre l'action consistant à :
fournir la tension induite à une unité de formation d'images d'un appareil de formation d'images.

14. Appareil de formation d'images, comprenant :
une unité de formation d'images ;
un appareil à sortie de tension selon la revendication 1 ;
la partie à sortie (700) comportant la partie à transformation d'énergie (30) possédant la bobine primaire (N₂) et la bobine secondaire (N₃), cas dans lequel la bobine primaire et la bobine secondaire sont agencées de façon à fournir une tension à l'unité de formation d'images ; et
une puce monolithique individuelle configurée de façon à recevoir les données de commande en provenance de l'un au moins des postes suivants, à savoir l'unité de formation d'images et l'appareil à sortie de tension, afin d'interrompre un courant fourni à la bobine primaire en fonction des données de commande, et de générer la tension avec le courant interrompu dans la bobine secondaire.

15. Appareil selon la revendication 14, la puce monolithique comprenant :
une partie à interfaçage numérique (100) configurée de façon à recevoir les données de commande et à procurer la deuxième tension de référence (Vo*) en fonction des données de commande reçues ; et
au moins un canal à haute tension configuré de façon à assurer la sortie de la tension,
cas dans lequel la partie à commande numérique est agencée de façon à recevoir la deuxième tension de référence en provenance de la partie à interfaçage numérique, ainsi que le deuxième signal de rétroaction en provenance de la partie à sortie (700), et à procurer un signal d'attaque en fonction d'une comparaison entre la deuxième tension de référence reçue et le deuxième signal de rétroaction ; et
la partie à commutation est agencée de façon à recevoir le signal d'attaque à partir de la partie à commande numérique et à interrompre le courant acheminé à la bobine primaire, en fonction du signal d'attaque.
